# EUROPÄISCHE PATENTSCHRIFT

(11) **EP 2 295 390 B1**
(45) Veröffentlichungstag und Bekanntmachung des Hinweises auf die Patenterteilung: **18.02.2015**
(21) Anmeldenummer: 10005042.6
(22) Anmeldetag: 12.05.2010
(51) Int. Cl.: C04B 38/06, C04B 38/08

(54) **Verfahren zur Herstellung eines zellularen Sinterformkörpers**
Method for producing a cellular sinter mould
Procédé de fabrication d'un corps à forme frittée cellulaire

(30) Priorität: 04.09.2009 DE 102009040258
(43) Veröffentlichungstag der Anmeldung: 16.03.2011
(60) Teilanmeldung: 13000241.3
(73) Patentinhaber: Jaeckel, Manfred, 27612 Loxstedt (DE)
(72) Erfinder: Jäckel, Manfred, 27612 Loxstedt (DE); Danz, Karl-Christian, 99423 Weimar (DE)
(74) Vertreter: Herrmann, Uwe

(56) Entgegenhaltungen:
- US-A1- 2007 037 991
- US-A1- 2008 307 760

## Beschreibung

Die Erfindung betrifft ein Verfahren zur Herstellung eines zellularen Sinterformkörpers umfassend die Fertigungsschritte Aufbereiten einer thermoplastisch fließfähigen Formmasse als feines Pulver und/oder Granulat, Einarbeiten von Expansionsmitteln, Aufschäumen der Formmasse mittels des Expansionsmittels und Verfestigen und Sintern der Formmasse zur Herstellung des Formkörpers.

Das Aufschäumen einer Formmasse mittels verschiedener Expansionsmittel zur Herstellung zellularer, poröser Sinterformkörper ist aus dem Stand der Technik bekannt. So offenbart EP 0 460 392 A1 ein Verfahren zur Herstellung aufschäumbarer Metallkörper. Es wird eine Mischung aus einem Metallpulver und einem unter Hitzeeinwirkung gasentwickelnden Expansionsmittelpulver hergestellt und bei einer Temperatur oberhalb der Zersetzungstemperatur des Expansionsmittels heiß kompaktiert. Die Zersetzung des Expansionsmittels wird während des Kompaktierens aber durch einen hohen Außendruck verhindert. Die kompaktierte Formmasse bildet einen gasdichten Abschluss für die Gasteilchen des Expansionsmittels. Nun wird auf so hohe Temperaturen erhitzt, dass das Matrixmetall schmilzt und sich das Expansionsmittel von innen durch Aufschäumen der Schmelze nachgibt. Als Expansionsmittel werden Titanhydroxid, Aluminiumhydroxid und Natriumbicarbonat genannt. Ein Nachteil dieses Verfahrens ist eine prozessbedingt unzureichende Kontrollierbarkeit der Porenbildung, die im Inneren unter der kompaktierte, gasdichten Außenhaut erfolgt. Die Poren können sich ungewünscht vereinigen. Somit ist die Determinierbarkeit der Porenstruktur eingeschränkt, selbst bei nur mäßig hohen Gesamtporenvolumina. Weitere Nachteile dieses Verfahrens sind die hohe Schäumtemperatur und die potentielle unkontrollierete Schrumpfung des Formkörpers nach dem Aufschäumen.

U.S. 5,213,612 A1 offenbart ein weiteres Verfahren zur Herstellung eines porösen Metallkörpers. Die Porenstruktur wird hierbei durch Erhitzen und Trocknen einer wässrigen Suspension aus Metallpulver und einem schäumfähigen reaktiven Kunstharz, beispielsweise einem mit Isocyanat überdeckten Polyoxidethylenpolyol. Dieses Schaumharz macht die Verwendung eines zusätzlichen Expansionsmittels überflüssig und wird gemäß einem Ausführungsbeispiel unter 50 %iger Volumensausweitung ausgehärtet und geschäumt. Ein Nachteil dieses Verfahrens liegt darin, daß der effktive Expansionsgrad begrenzt ist, weil es zu Schrumpfungen nach dem Aufschäumen/Aushärten kommt. Der praktisch beherrschbare Porenanteil im gesinterten Körper liegt zwischen 10 Vol.-% bis 20 Vol.-%, was die Ausbildung von durchgängig offenzelligen Porenstrukturen ausschließt.

EP 0 765 704 A1 beschreibt ein weiteres Verfahren, wonach eine Formmasse aufgeschäumt und anschließend gesintert wird. Zwei getrennt aufbereitete Stoffzubereitungen, einerseits eine das Expansionsmittel und einen harzigen Binder enthaltende Komponente, anderseits eine das Metallpulver und einen wasserlöslichen harzigen Binder enthaltende Komponente, werden kurz vor dem geplanten Schäumungsprozess vermischt. Die Schäumung erfolgt unter Erwärmung bei gleichzeitiger Aushärtung durch Trocknung. Als passende Expansionsmittel werden flüchtige organische Lösungsmittel sowie alle Stoffe offenbart, die bei ihrer temperaturbedingten Zersetzung in diesem Temperaturbereich Gase entwickeln. Danach erfolgt das Sintern des Metallpulvers in der erzeugten Überstruktur bei den dafür erforderlichen Temperaturen. Das entstehende Sinterskelett nach diesem Verfahren weist neben den Expansionsgasbedingten Makroporen selbst ebenfalls eine Porenstruktur auf. Diese Mikroporen werden durch Hohlräume zwischen den Metallpartikeln geschaffen, die vorher von den Binderkomponenten eingenommen wurden. Mit diesem Verfahren lässt sich ein Sinterkörper fertigen, der rissfreier und damit mechanisch stabiler ist als zum Zeitpunkt der Anmeldung handelsübliche Sinterkörper.

Die US 2007/0037991 A1 und die US 2008/0307760 A1 offenbaren Verfahren, wobei wasserhaltige, fließfähige Keramikpulvermassen zu Formteilen geformt, getrocknet, und bei Temperaturen von über 1000°C gebrannt werden. In beiden Fällen sollen neben den für Sinterformkörper typischen Mirkoporen auch Grobporen geschaffen werden. Dies erfolgt durch Auswahl verschiedener Al-Oxid Qualitäten und die Brenntemperatur. Zur Erzielung einer größeren inneren Oberfläche wird ferner auch die Einlagerung diverser Platzhaltersubstanzen vorgeschlagen, darunter auch blähfähige Mikrosphären. Diese werden vor der Trockung der fließfähigen Massen expandiert.

EP 1 587 772 A1 stellt den nächstliegenden Stand der Technik für ein Verfahren zur Herstellung eines zellularen keramischen Sinterformkörpers dar. Es offenbart ein Verfahren, mit dem zellulare Sinterformkörper produzierbar sind, welche die bisher genannten Nachteile nicht aufweisen. Offenbarungsgemäß wird eine thermoplastisch fließfähige Formmasse durch Mischen von Keramik- und/oder Metallpulver mit Binderkomponenten und Einarbeitung von Expansionsmittelhaltigen Kunststoffpartikeln aufbereitet, die entstehende Formmasse in einen schmelzflüssigen Zustand überführt und anschließend in eine Formgebungsvorrichtung eingebracht. Hierauf wird die Formmasse durch die aufschäumenden Kunststoffpartikei unter Temperatureinfluss expandiert, anschließend verfestigt, und die organischen Komponenten werden ausgebracht. Anschließend wird der derartig behandelte Formkörper gesintert. Als Expansionsmittel werden blähfähige Polystyrolteilchen verwendet und das Expandieren findet bei Temperaturen zwischen ca. 80 °C und 130 °C statt.

Mit dem Verfahren gemäß EP 1 587 772 A1 können hochporöse Sinterformkörper mit einer Skelettstruktur hergestellt werden, d. h. sie weisen gemessen am Volumen der durch sie gebildeten Poren vergleichsweise dünne Zellwände auf. Die fertigen Sinterformkörper bestehen aus einem tragfähigen Skelett aus den Matrixwerkstoffen Metall und/oder Keramik, ohne oder nur noch mit unbedeutend kleinen Restanteilen der der Formmasse ursprünglich beigegeben Zusätze . Sie besitzen hohe mechanische Festigkeit und weisen je nach Anforderungen einen weitgehend homogenen und einheitlichen Porendurchmesser von vorzugsweise 0,5 mm bis 10 mm auf. In der Praxis werden mit diesem Verfahren Mindestdurchmesser von etwa 0,6 mm bis etwa 0,8 mm realisiert. Porendurchmesser von 0,1 mm oder kleiner sind mit diesem Verfahren technisch nicht realisierbar. Derartige Sinterformkörper finden schwerpunktmäßig Anwendung im Bereich der Leichtbauteile, als Werkstoffe mit vergleichsweise geringer thermischer Leitfähigkeit (Ofenbauteile, etc.), als mechanische Filter und als Träger für industrielle Katalysatoren.

Ein bedeutsames Anwendungsgebiet für keramische Porensinterplatten könnten Sinterunterlagen bei der MIM-Technologie (Metal-Injection-Molding) sein. Auf Grund der relativ groben Zellstruktur sind die gemäß EP 1 587 772 B1 herstellbaren Platten als Sinterunterlage in der MIM-Industrie aber nicht geeignet, da eine MIM-Teilschwindung von etwa 15 - 20 Vol.-% eine gute Rutschfähigkeit auf der Unterlage verlangt. MIM-Kleinteile lassen sich auf den groben Zellstrukturen gemäß EP 1 587 772 B1 generell nicht herstellen und große Bauteile können sich in den oberflächlich herausragenden Zellwänden verklemmen.

Poröse Keramiken mit geringeren Porengrößen und einer folglich größeren inneren Oberfläche als mit dem Verfahren gemäß EP 1 587 772 A1 hergestellte Sinterformkörper wären für viele technische Anwendungen wünschenswert, insbesondere bei einer Anwendung als Katalysatorträger für zahlreiche chemische Industrie-Prozesse, als Filter oder als Adsorbens. Solche Keramiken sind mit der Lehre aus EP 1 587 772 A1 nicht herstellbar.

Diese Anwendungen verlangen ebenfalls gute Durchströmbarkeit und Bruchfestigkeit wie Sinterfestkörper gemäß EP 1 587 772 A1. Ein generelles Problem von Verfahren aus dem Stand der Technik dabei ist, dass bei Verringerung der Porengröße die Porosität gleichzeitig abnimmt und daß folglich die wichtige Eigenschaft der hohen Bruchfestigkeit mit geringerer Porosität einhergeht.

Hinsichtlich einer Verwendungsmöglichkeit von Schaumkeramiken beschreiben Standke et. al in Vortragstexte des 15. Symposiums Verbundwerkstoffe und Werkstoffverbunde, 2005, Kassel, Seiten 257 - 262*,* ein Verfahren zur Herstellung von Matrix-Metall-Verbundwerkstoffen durch Imprägnierung von Schaumkeramiken. Demnach hatten geeignete, für die Imprägnierung ausreichend offenporige Schaumkeramiken aus dem Stand der Technik einen Volumenanteil von nur etwa 10 Vol.-% an Keramik. Ziel des ausgegebenen Forschungsprojektes war es, einen solchen Anteil auf etwa 30 Vol.-% bis etwa 40 Vol.-% zu erhöhen, zum Zeitpunkt der Veröffentlichung wurden jedoch nur etwa 15 Vol.-% bis etwa 20 Vol.-% erreicht. Erstrebenswerte E-Moduli der Verbundwerkstoffe wurden als über 150 GPa identifiziert.

Ziel der vorliegenden Erfindung ist es, ein Verfahren zur Herstellung von Sinterformkörpern zu entwickeln, das ähnlich dem Verfahren gemäß EP 1 587 772 A1 unter vorzugsweiser Anwendung kunststofftypischer Schäumtemperaturen in porösen Sinterformkörpern resultiert, die vorzugsweise hohe Stabilität, dünne Zellwände, hohes Porenvolumen, weitgehend homogene, determinierbare und vernetzte Porennetzwerke, sowie ein Sinterskelett im wesentlichen frei von Zusätzen aufweisen.

Der Begriff "Porenvolumen", wie er in der Beschreibung und in den Ansprüchen verwendet wird, bezeichnet den volumsmäßigen Anteil der Poren am Gesamtkörper, sowohl der durch die Kunststoffexpansion erzeugten Alpha-Zellen als auch der potentiell in der Gerüststruktur vorhandenen Beta-Poren, die durch Resthohlräume zwischen den Sinterpulverpartikeln oder durch eine innere Porenstruktur des Sinterpulvers bedingt sein können.

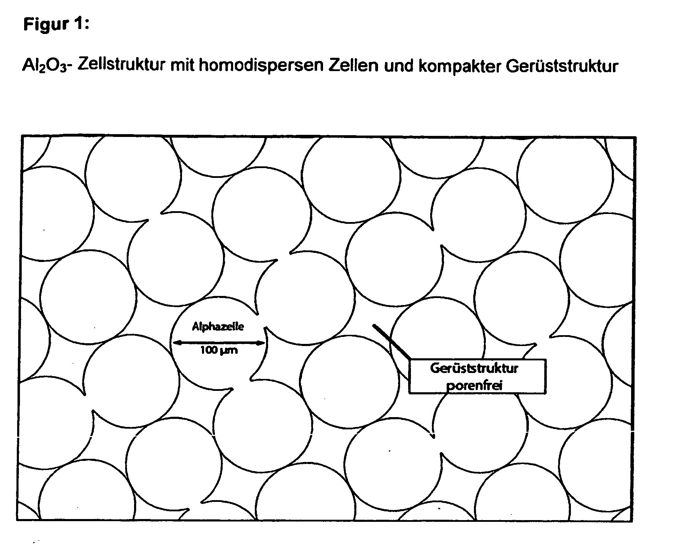

Schwerpunktmäßig soll die Größe der Alpha-Poren (erläuternd siehe Figur 1) aus der Expansion des Kunststoffbinders im Vergleich zum Stand der Technik verringert werden. Diese Alpha-Poren sollen vorzugsweise entweder homodispers gleichmäßig über das Sinterkörpervolumen verteilt vorliegen oder auch in definierten, abgestuften verschiedenen Porengrößen deutlich unterhalb der nach dem Stand der Technik bekannten Alpha-Porenstrukturen einstellbar sein.

Ein weiteres Ziel der Erfindung ist es, auf diese Weise einen porösen Sinterformkörper herzustellen, der sich als Sinterunterlagen bei der MIM-Technologie eignet, der als geeignetes Template zur Herstellung von Metall-Matrix-Verbundwerkstoffen, als Katalysatorenträger, als Gerüststruktur für Knochenersatz, als Wärmetauscher oder sonstiger innovativer Leichtbaustoff mit feinporöser Skelettstruktur dienen kann.

Diese Aufgabe wird erfindungsgemäß mit einem Verfahren gemäß Anspruch 1 gelöst. Die einzelnen Verfahrensschritte können auch in abweichender Reihenfolge durchgeführt werden.

In einer bevorzugten Ausführungsform umfasst das Verfahren zur Herstellung eines zellularen Sinterformkörpers die folgenden Fertigungsschritte:
a) Aufbereiten einer thermoplastisch fließfähigen Formmasse durch Mischen von Keramik- und/oder Metallpulver mit Binderkomponenten, ohne Expansionsmittel, Überführen der Formmasse in einem Schneckenplastieraggregat oder ähnlichem Aggregat in den schmelzflüssigen Zustand und Herstellung eines rieselfähigen Granulats;
b) Einarbeiten von physikalisch wirksamen Expansionsmitteln durch Trockenmischen, Überführen der Formmasse in einem Schneckenplastieraggregat oder ähnlichem Aggregat in einen schmelzflüssigen Zustand bei Temperaturen, bei der die Expansionsmittel genügend Innendruck erzeugen, und beim Überführen der Schmelze in ein formgebendes Werkzeug unter Druckabfall dieses durch Aufschäumen räumlich zu füllen und nach Austreten die Formmasse durch Kühlung verfestigen zu lassen;
c) Ausbringen restlicher Expansionsmittelprodukte, und Binderkomponenten und Sintern des derart behandelten Formkörpers;
wobei als erfindungsgemäßes Expansionsmittel ausschließlich oder unter anderem blähfähige Mikrosphären verwendet werden und das Aufschäumen bei Temperaturen zwischen 130°C und 200°C erfolgt. Die einzelnen Schritte a) bis c) und die einzelnen Prozesse innerhalb eines Schrittes können in diesem Verfahren auch in einer abweichenden Reihenfolge durchgeführt bzw. weggelassen werden.

In einer Ausführungsform wird in Verfahrensschritt b) die schmelzflüssige Formmasse unterhalb der Expansionstemperatur der Mikrosphären plastiziert und in einem Granulierkopf zu ungeschäumtem Granulat verformt. Dieses Granulat kann in einem separaten Schritt in einer perforierten Form bei Verschäumungstemperaturen von zwischen 130°C und 200°C zu einem geschäumten Grünkörper aufgeschäumt werden.

In einer alternativen Ausführungsform umfaßt Verfahrensschritt a) die Herstellung einer Mischung von Keramik- und/oder Metallpulver in organischem Lösungsmittel und in selbigem organischen Lösungsmittel löslichen Binderkomponenten zu einer homogenen Suspension, Ausfällung dieser Suspension in einem anderen Lösungsmittel, bevorzugt Wasser, Abfiltrieren, und Trocknen zu einem rieselfähigen Pulver. Bevorzugt ist das genannte organische Lösungsmittel ein Alkohol, besonders bevorzugt Ethanol. Diese alternative Ausführungsform, auch Nassgranulation genannt, wird bevorzugt zur Herstellung von erfindungsgemäßen Sinterformkörpern im kleinen Maßstab oder im Labormaßstab verwendet. In einer weiteren Ausführungsform der Naßgranulation wird das Formmassenpulver sprühgetrocknet und/oder in einem geeigneten Mischer hergestellt. Ein derartig hergestelltes Formmassenpulver kann mit den Mikrosphären gemischt, und gemäß Verfahrensschritt b) weiterverarbeitet werden.

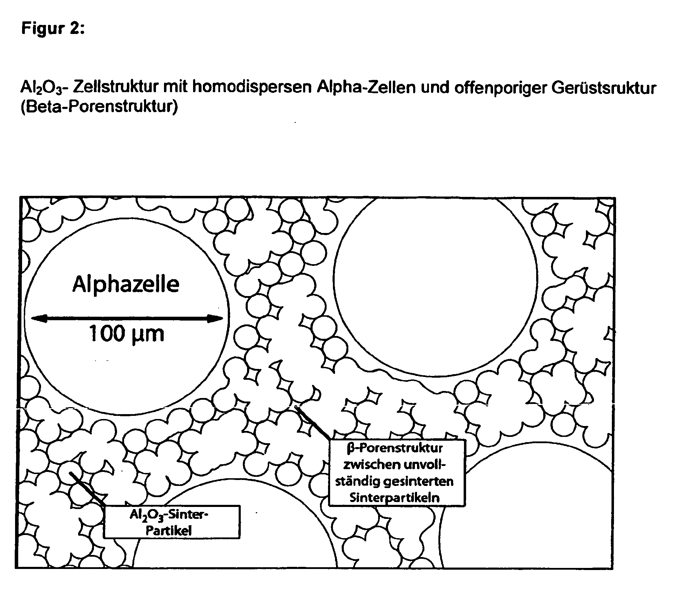

Das entstehende Produkt ist eine mikroporöse Keramik mit offenzelliger Gerüststruktur (siehe beispielsweise Figur 2). Diese offenzelligen Strukturen, die einem feinporigen Schwamm ähnlich sind, können beispielsweise in Form von Platten, Rohren oder Granulaten hergestellt werden kann.

Vorteile gegenüber porösen Sinterformkörpern nach dem Stand der Technik können sich daraus ergeben, dass durch die Anwendung von blähfähigen Mikrosphären als Expansionsmittel hohe Stabilität, dünne Skelettzellwände, hohes Gesamtporenvolumen, weitgehend homogene, determinierbare und verbundene Porennetzwerke und Sinterskelette im wesentlichen frei von Zusätzen auch bei sehr kleinen Porendurchmessern erzielt werden. Dies ist für diverse Anwendungen im Leichtbau, im Ofenbau und für Sinterunterlagen mit guter Thermoschockbeständigkeit, insbesondere aber als Katalysatorträger, entscheidend.

Als metallische oder keramische Matrixwerkstoffe eignen sich zur Anwendung in dem erfindungsgemäßen Verfahren alle sinterfähigen Substanzen. In einer bevorzugten Ausführungsform umfassen die keramischen Matrixwerkstoffe Aluminium-, Magnesium-, Silizium-, und/oder Zirkonoxid, sowie Siliziumnitrid und/oder -carbid und Mischungen derselben. In einer bevorzugten Ausführungsform umfassen die metallischen Matrixwerkstoffe Metalle und Legierungen ausgewählt aus der Gruppe Eisen, Kobalt, Nickel, Kupfer, Titan, Tantal, Molybden, Wolfram, alle Edelmetalle, sowie metallische Oxide, Hydride und Hartmetalle. Jedoch können in einem erfindungsgemäßen Verfahren auch andere, dem Pulvermetallogen bekannte, sinterfähige Werkstoffe zum Einsatz kommen.

In einer besonders bevorzugten Ausführungsform werden die keramischen Matrixwerkstoffe aus der Gruppe Aluminiumoxid und/oder Silizumcarbid ausgewählt.

Die blähfähigen Mikrosphären werden vorzugsweise im wesentlichen unexpandiert und/oder nur teilweise expandiert in die Formmasse eingemischt. Geeignete Methoden zur Einmischung sind aus dem Stand der Technik bekannt, beispielsweise ein einfacher Propellerrührer.

Zur erfindungsgemäßen Anwendung geeignete Mikrosphären umfassen thermisch expandierbare, kleine, sphärisch geformte Kunststoffkugeln, welche aus einer Polymerschicht bestehen, in der ein Expansionsgas eingeschlossen ist. Im unexpandierten Zustand besitzen solche Mikrosphären einen Durchmesser von etwa 5 µm bis 50 µm, in einer bevorzugten Ausführungsform 5 µm bis 40 µm und in einer besonders bevorzugten Ausführungsform 10 µm bis 30 µm. Die Dichte im unexpandierten Zustand beträgt anfänglich etwa 800 kg/m³ bis 1500 kg/m³, bevorzugt etwa 1000 kg/m³ bis 1300 kg/m³. Sie haben einen Festkörpergehalt von etwa 40 Gew.-% bis etwa 99 Gew.-%, bevorzugt von etwa 60 Gew.-% bis etwa 99 Gew.-% und besonders bevorzugt von etwa 60 Gew.-% bis etwa 80 Gew.-%. In einer besonders bevorzugten Ausführungsform der Erfindung werden EXPANCEL - Mikrosphären verwendet, die u.a. in EP 1 636 422 A1 beschrieben werden.

Die Polymerschicht der expandierbaren Mikrosphären besteht vorzugsweise aus einem thermoplastischen Polymer. In einer Ausführungsform ist dieses thermoplastische Polymer ein Polyalken-Copolymer, optional mit Beimischung von Acrylsäureestern und/oder Methacrylsäureestern und/oder Vinylhalidmonomeren. Das Material und die Stärke der Polymerschicht werden vorzugsweise so gewählt, dass die Mikrosphären ein hohes Maß an Gasdichtigkeit und Druckbeständigkeit aufweisen. Als Treibgas im Inneren der Mikrosphären eignen sich leichtflüchtige Stoffe oder Gase. Nicht abschließende Beispiele umfassen Kohlenwasserstoffe, insbesondere Propan, Butan oder Isopropan, verschiedene flüchtige Ether, und halogenierte Kohlenwasserstoffe, wie beispielsweise Dichlorethan. Der Siedepunkt von geeigneten Treibgasen liegt bevorzugt zwischen etwa -50 °C und 100 °C unter Normaldruck.

Ein bevorzugter Temperaturbereich zur Expansion der Mikrosphären beträgt zwischen etwa 140 °C und etwa 190 °C. Während der Expansion im beanspruchten Temperaturbereich erhöht sich das Volumen der Mikrosphären auf mehr als das 20-fache, bevorzugt mehr als das 30-fache. Folglich weisen die Mikrosphären im expandierten Zustand einen Durchmesser von etwa 15 µm bis etwa 150 µm, bevorzugt von etwa 15 µm bis etwa 120 µm und besonders bevorzugt von etwa 30 µm bis etwa 90 µm auf Die Dichte der Mikrosphären nach der Expansion ist kleiner als etwa 40 kg/m³, bevorzugt kleiner als etwa 30 kg/m³ und in einer besonders bevorzugten Ausführungsform kleiner als etwa 20 kg/m³.

Als Binder eignen sich im erfindungsgemäßen Verfahren prinzipiell alle in der Pulverspritzgießerei (PIM, Powder Injection Molding), der Metallpulverspritzgießerei (MIM, Metal Injection Molding) und Keramikpulverspritzgießerei (CIM, Ceramic Injection Molding) bekannten Bindesysteme. Nicht abschließende Beispiele umfassen Polyolefinwachse, Polyalkohole oder Polyvinylalkohole, derivatisierte Zellulose, Polyethylen oder Polypropylen und Bindesysteme auf Polyacetalbasis, wie z.B. Polyoximetylen (POM), bevorzugt sind Polyamide, Polyvinylpyrrolidon und/oder Polyacrylate. In einer Ausführungsform lassen sich die Bindesysteme katalysatorfrei mit einem Lösungsmittel aus dem verfestigten Formkörper auswaschen Die Formmasse kann weitere Zusatzstoffe enthalten, wie beispielsweise Öle, Ester, Glyzerine und andere Plastifizierungsmittel.

Das erfindungsgemäße Verfahren kann auch beliebig mit Methoden aus dem bisherigen Stand der Technik kombiniert werden. So können der fließfähigen Formmasse aus Anspruch 1 zusätzlich zu den Mikrosphären auch andere, thermisch instabile und gasabspaltende Stoffen zur zusätzlichen Bildung von Poren im Formkörper beigemischt werden, sowie chemisch lösliche oder mittels Pyrolyse verflüchtigbare Platzhalterteilchen zur weiteren Bildung von Poren im Formkörper.

In einer bevorzugten Ausführungsform erfolgt das Aufschäumen der Formmasse bei Temperaturen zwischen etwa 140 °C und etwa 190 °C. Diese Temperaturbereiche entsprechen im Wesentlichen den zur Expansion der im erfindungsgemäßen Verfahren zur Anwendung kommenden Mikrosphären geeigneten Temperaturbereichen.

Die Expansionsmittel- und Kunststoffreste aus den Mikrosphären, und gegebenenfalls Binder und andere organische Komponenten oder Expansionsmittel werden aus dem fertig aufgeschäumten, verfestigten Formkörper entweder durch Auswaschen mit organischen Lösungsmitteln, oder rein thermisch bis zur Pyrolyse der Polymermatrix entfernt. Die entstehenden Hohlräume zwischen den zu sinternden Metall- oder Keramkpartikeln bedingen eine Mikroporosität der Skelettstruktur (Beta-Porenstruktur). Durch sie kann der Austritt der Zersetzungsgase aus den organischen Mischungsbestandteilen mit fortschreitendem Temperaturanstieg erfolgen. Anschließend wird der Formkörper bei einer für das verwendete Material geeigneten Temperatur gesintert. In Abhängigkeit von den spezifischen Eigenschaften des Sinterwerkstoffes, seiner Partikelgröße und der Sintertemperatur kann dabei die Betaporenstruktur des Sinterskelettes (Figur 2) ganz oder teilweise erhalten oder auch komplett verschlossen werden.

Die durch das erfindungsgemäße Verfahren herstellbaren, zellularen Sinterformkörper können eine mittlere Alpha-Skelettporengröße von weniger als 120 µm, vorzugsweise eine mittlere Skelettporengröße von weniger als 100 µm aufweisen. Die Skelettporen werden dabei aus miteinander verbundenen, sphärischen Hohlräumen gebildet. Möglich ist eine mittlere Alpha-Skelettporengröße zwischen 50 µm und 100 µm. Der Sinterformkörper besitzt außerdem eine homogene Alpha-Zellverteilung mit einer homogene Struktur und einer engen Alpha-Porengrößenverteilung mit nur geringfügig um den Mittelwert streuenden Porendurchmessern. Das Alpha-Porenvolumen eines solchen Sinterformkörpers beträgt mehr als etwa 60 Vol.-%, mehr als etwa 75 Vol.-%, oder zwischen etwa 75 Vol.-% und etwa 85 Vol.-%. Generell kann es bis zu etwa 85 Vol.-% des Sinterformkörpers betragen und ggf. zwischen etwa 60 Vol.-% und etwa 85 Vol.-%. Solche hohen Porenvolumina sind in mechanisch stabilen Sinterformkörpern nur bei einer streng geometrischen und sehr regelmäßigen Anordnung der Poren erreichbar.

Die durch das erfindungsgemäße Verfahren herstellbaren, zellularen Sinterformkörper werden bevorzugt in Form von Platten, Rohren, Granulaten u.Ä. als Leichtbauteile, im Ofenbau, als Sinterunterlage, als Template für Metall-Keramik Verbundwerkstoffe, sowie als Katalysatorträger verwendet.

Aluminiumoxid- und Siliziumcarbid-Keramiken eignen sich sehr gut für Metall-Keramikverbunde mit viel kleineren Poren als die derzeit großtechnisch verfügbaren, porösen Keramiken. Wenige Millimeter dicke Platten aus Aluminiumoxid, hergestellt mit dem erfindungsgemäßen Verfahren, eignen sich besonders als Sinterunterlage in der Pulvermetallurgie zum Sintern von kompakten metallischen Formteilen. Eine Anwendung der Schaumkeramik ist die Herstellung von Hohlkammerplatten, Leichtbauteilen und Bauteilen mit vergleichsweise geringer thermischer Leitfähigkeit. Platten und Rohre aus der Keramik eignen sich aufgrund ihrer guten Thermoschockbeständigkeit für zahlreiche industrielle Anwendungen.

Eine bevorzugte Verwendung von solchen porösen Sinterformkörpern besteht in keramischen oder keramisch/metallischen Trägermaterialien für katalytische Anwendungen in der chemischen Industrie oder auch für biochemische Katalyseverfahren. Die Sinterformkörper besitzen bereits durch das hohe Alpha-Porenvolumen und den kleinen mittleren Porendurchmesser der Alpha-Zellstruktur bedingt eine sehr hohe spezifische Oberfläche, auch wenn die Gerüststruktur nach dem Keramisieren vollständig dicht gesintert ist und keine Beta-Porenstruktur im verbleibenden Zellgerüst mehr vorhanden ist. Formabhängig kann unter diesen Bedingungen die wirksame Oberfläche des Sinterformkörpers mehr als das 20-fache, mehr als das etwa 30-fache, mehr als das etwa 40-fache oder das etwa 20-50-fache der äußeren Oberfläche ausmachen.

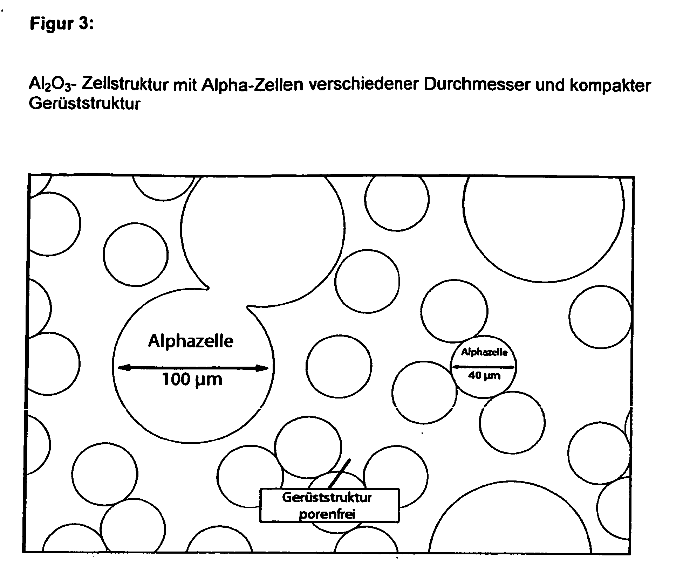

Dies kann insbesondere dadurch erreicht werden, dass relativ große Mikrosphären (von z.B 120 µm Durchmesser im expandierten Zustand) mit relativ kleinen Microsphären (von z. B. 40 µm Durchmesser im expandierten Zustand) in einer ungesschäumten Ausgangsmischung miteinander kombiniert werden. Nach dem Expandieren erreicht man eine besonders hohe Volumenausnutzung durch Microspärenhohlräume im Sinterkörper in der Form, daß die Zwickelvolumen zwischen den großen Mikrosphären mit den kleineren Microsphären gefüllt sind Figur 3). Es ergibt sich nach dem Sintern eine besonders gute Durchströmbarkeit des Sinterskeletts, hohes Gesamtporenvolumen und niedriges Gewicht des Sinterformkörpers.

Bei Vermeidung des vollständigen Zusammensinterns der Pulverpartikel des Sinterwerkstoffes durch Auswahl entsprechender Sintermaterialien, Partikelgrößen und/oder entsprechender Keramisierbedingungen kann eine offene Beta-Porenstruktur erzeugt werden, die bis in Nanometer-Größenordnung reichen kann. Die innere wirksame Oberfläche der Porensinterkörper kann damit nochmals um ein bis zwei Zehnerpotenzen gesteigert werden.

Die Gerüststruktur eines solchen zellularen Sinterformkörpers ist durch den hohen Verbindungsgrad, die Regelmäßigkeit und das hohe Alpha-Porenvolumen sehr gut durchströmbar. Dadurch ist die Innenoberfläche für Gase, Flüssigkeiten und darin gelöste bzw. dispergierte Teilchen sehr gut zugänglich und die poröse Keramik eignet sich hervorragend zur Anwendung in der Katalyse.

Eine Anwendung der Sinterkeramik ist der Einsatz in einem Katalysatorträger, bestehend aus einer porösen Sinterkeramik, die als unterschiedlich geformte, profilierte Rohre oder Platten mit Kanälen oder Stegen zur Erhöhung der Oberfläche ausgebildet sind. Auch sind wabenförmige Katalysatorträger oder andere offenzellige Träger, wie beispielsweise Granulate in unterschiedlicher Geometrie ausführbar.

Neben der Steigerung der katalytisch aktiven Oberfläche spielen in der heterogenen Katalyse vor allem das Gewicht des Katalysators, Druckverluste beim Durchströmen bzw. Durchströmbarkeit der Prozessgase eine große Rolle. Die Oberfläche des Formkörpers ist für die katalytische Reaktion im Vergleich zu einem grobporöseren Formkörper beispielsweise gemäß EP 1 587 772 B1 etwas schwerer zugänglich. Jedoch für Prozessgas von bis zu mehreren 100 °C und mit thermisch bedingt hoher Molekülbeweglichkeit ist er sehr gut durchströmbar. Dies verdanken die Formkörper hauptsächlich ihrer offenzelligen Struktur, dem großen freiem Gesamtporenvolumen, sowie der verbundenen, regelmäßigen Alpha-Porenstruktur. Das Gewicht wird durch den großen Anteil an freiem Innenvolumen verhältnismäßig gering gehalten.

Je nach Anwendung kann ein zellularer Sinterformkörper an dessen Oberfläche noch zusätzlich mit einer hochdispersen, oberflächenaktiven Substanz imprägniert werden, um die Oberfläche weiter zu erhöhen. Diese Substanz kann hochdisperses Aluminiumoxid mit spezifischen Oberflächen von 50 m²/g bis zu 250 m²/g sein. Weitere Beispiele für Beschichtungen sind Aktivkohle, Titandioxid und Zeolithe.

Eine katalytisch wirksame Substanz kann nun beispielsweise entweder direkt auf den keramischen Katalysatorträger oder auf die oberflächenaktive Imprägnierung, beispielsweise hochdisperses Aluminiumoxid, aufgetragen werden. Ggf. werden Katalysatormaterialien durch Imprägnierung aufgebracht, beispielsweise durch Eintauchen in eine Lösung der aktiven Komponente(n), anschließend calciniert und durch Reduktion, beispielsweise mit Kohlenmonoxid, Wasserstoff oder anderen reduzierenden Stoffen wie beispielsweise Alkoholdampf, reduziert. Die katalytische Substanz kann im Inneren der Keramik homogen oder inhomogen, beispielsweise im Eierschalen- oder im Eidottermuster, verteilt sein.

Das erfindungsgemäße Verfahren eröffnet auch neue Möglichkeiten in der Herstellung von Metall-Keramik Verbundwerkstoffen, da offenporige Schaumkeramiken bisher nicht über ausreichend feine Porenstrukturen verfügen, um ausreichend große Oberflächen für den sicheren Verbund zum imprägnierten Metall zu gewährleisten. Im Gegensatz zum Stand der Technik, Standke et al., können solche Verbundwerkstoffe durch die Imprägnierung von erfindungsgemäß hergestellten Keramiken mit ihrer ausgesprochen offenen, feineren und regelmäßigen Porenstruktur mit beispielsweise 80 Vol.-% Porenvolumen einen keramischen Volumenanteil von 20 Vol.-% erreichen. Ggf. beträgt der keramische Volumenanteil des mit Hilfe einer solchen Schaumkeramik hergestellten Metall-Keramik Verbundwerkstoffes über 25 Vol.-%, über etwa 30 Vol.-%, oder über etwa 35 Vol.-%. Ein so hergestellter Metall-Keramik Verbundwerkstoff besitzt einen deutlich erhöhten E-Modul durch die verbesserte metallische Anbindung an den Keramikwerkstoff.

Neben den genannten technischen Anwendungen eignen sich die keramischen Katalysatorträger auch für die Biokatalyse als Trägermaterialien.

Weitere Vorteile und Einzelheiten der Erfindung werden anhand der im Folgenden beschriebenen Zeichnungen und Ausführungsbeispiele näher diskutiert.

In den Zeichnungen zeigen:
- Figur 1:: einen schematischen Querschnitt durch eine erfindungsgemäß hergestellte Al₂O₃-Sinterkeramik mit homodispersen Zellen und kompakter Gerüststruktur
- Figur 2:: einen schematischen Querschnitt durch eine erfindungsgemäß hergestellte Al₂O₃-Sinterkeramik mit homodispersen Alpha-Zellen und offenporiger Gerüststruktur (Beta-Porenstruktur)
- Figur 3:: einen schematischen Querschnitt durch eine erfindungsgemäß hergestellte Al₂O₃-Sinterkeramik mit Alpha-Zellen verschiedener Durchmesser und kompakter Gerüststruktur

Figur 1 zeigt einen schematischen Querschnitt durch eine erfindungsgemäß hergestellte Al₂O₃-Sinterkeramik. In der Zellstruktur sind homodisperse Zellen mit einem weitgehend homogenen Durchmesser von etwa 100 µm vorhanden, deren Größe damit im Vergleich zum Stand der Technik deutlich verringert ist. Diese spiegeln die durch die Expansion der Kunststoffbläschen entstehenden Alpha-Zellen wieder. Der Anteil am Gesamtvolumen der Keramik, das Porenvolumen, ist groß und beträgt in der Abbildung mehr als 60 Vol.-%. Die Struktur ist kompakt und nicht offenporig.

Figur 2 zeigt einen weiteren schematischen Querschnitt durch eine andere, ebenfalls erfindungsgemäß hergestellte Al₂O₃-Sinterkeramik. Neben den bereits in Figur 1 beschriebenen Alpha-Bläschen mit einem weitgehend homogenen Durchmesser von etwa 100 µm kann in dieser Abbildung auch die offenporige Skelettstruktur der Keramik, die Beta-Poren erkannt werden. Diese können durch Resthohlräume zwischen den Sinterpulverpartikeln und/oder durch eine innere Porenstruktur des Sinterpulvers entstehen, oder sie resultieren nach der Entfernung der Expansionsmittel- und Kunststoffreste aus den Mikrosphären, gegebenenfalls Binder und anderer organischer Komponenten oder Expansionsmittel aus dem fertig aufgeschäumten, verfestigten Formkörper. Sie verbinden die Alpha-Poren untereinander und führen damit zu einer feinporigen Struktur, die einem Schwamm ähnelt. Durch die Offenzelligkeit, die durch dieses Zusammenwirken zwischen Alpha- und Beta-Poren bedingt ist, kann diese Struktur trotz der geringen Porengröße von Gasen und Fluiden durchströmt werden und eignet sich daher beispielsweise für die Anwendung in der Katalyse.

Figur 3 zeigt einen schematischen Querschnitt durch eine dritte, erfindungsgemäß hergestellte Al₂O₃-Sinterkeramik. In der Zellstruktur sind zwei verschieden große Typen von homogen verteilten Alpha-Zellen vorhanden. Die durchschnittliche Größe beider Zellentypen (Durchmesser 100 µm bzw. 40 µm) ist im Vergleich zum Stand der Technik deutlich verringert. Die Keramik aus Figur 3 entspricht somit einer solchen mit abgestuften, verschiedenen Alpha-Porengrößen, allesamt auf Wunsch kleiner als im Stand der Technik einstellbar. Die verleiht der gezeigten Sinterkeramik eine besonders gute Durchströmbarkeit des Sinterskeletts, ein hohes Gesamtporenvolumen und ein niedriges Gewicht. Wie in der Abbildung gezeigt, können in einer erfindungsgemäßen Sinterkeramik auch mehrere Zellen miteinander verwachsen sein.

### Beispiel 1: Herstellung eines mikroporösen Al-Oxid-Granulatformkörpers

### Fertigungsschritt a)

80 Gew.-% sinterfähiges Aluminiumoxidpulver mit 1-3 µm Teilchengröße und 99,8 % Reinheit (Sorte CT 3000 SG, Fa. ALCOA) wird in einem Knetaggregat mit 20 Gew.-% organischen Zusatzstoffen (Bindersystem auf Basis Polyamid, Weichmacher, Netz- und Trennmittel) zunächst bei Raumtemperatur vermischt, und anschließend in einem Kneter bei Temperaturen von ca. 130 °C geknetet und plastiziert, bis eine homogene, niedrigviskose Masse vorliegt. Diese wird durch Abkühlen verfestigt und zu einem Granulat mit einer Teilchengröße von etwa 0,3 bis 1,0 mm vermahlen.

### Fertigungsschritt b)

97,5 % der so entstandenen Pulvermasse werden mit 2,5 Gew.-% expandierbaren Mikrosphären (EXPANCEL 093 DU 120, Fa. Akzo Nobel) in einem langsam laufenden Mischer vermischt. Die betreffenden Mikrosphären haben einen Durchmesser von 25-30 Mikron und eine Dichte von etwa 1 g/ml. Dieses Pulvergemisch wird auf einem 20 mm Einschneckenextruder mit 25 D langer Schnecke plastifiziert und mit einer Massentemperatur von ca. 155 °C in der letzten Zylinderzone im formgebenden Werkzeug mit 10 mm Strangdüse zum Aufschäumen gebracht, und nach Verlassen der Düse an Luft abgekühlt. Die so hergestellten Stränge werden anschließend separat mittels einer Schneidvorrichtung in Zylindergranulate der Größe 10 mm x 10 mm Durchmesser zugeschnitten.

### Fertigungsschritt c)

Die geschäumten Granulatkörner werden 24 h in 40 °C warmem Aceton gelagert und verlieren durch Herauslösen dabei über 50 Vol% des Binders. Nach dem Trocknen der Granulatkörper werden diese innerhalb von 12 h gleichmäßig auf Sintertemperatur von 1500 °C erwärmt und 1 h bei dieser Temperatur gehalten, danach innerhalb von ca. 4h gleichmäßig auf Normaltemperatur abgekühlt. Die fertigen mikroporösen Al-Oxid-Granulate haben eine offene Porosität von ca. 80 Vol % mit einer mittleren Porengröße von 120 µm und eine Dichte von ca. 0,7 g/cm³. Die Gerüststruktur selbst ist weitgehend dicht gesintert.

### Beispiel 2: Herstellung eines plattenförmigen mikroporösen Al-Oxidformkörpers

### Fertigungsschritt a)

80 Gew.-% sinterfähiges Aluminiumoxidpulver mit 1-3 µm mittlerer Teilchengröße und 99,8 % Reinheit (Sorte CT 3000 SG, Fa. ALCOA) wird in einem Knetaggregat mit 20 Gew.- % organischen Zusatzstoffen (Bindersystem auf Basis Polyacrylat, Weichmacher, Netz- und Trennmittel) zunächst bei Raumtemperatur vermischt und anschließend in einem Kneter bei Temperaturen von ca. 130 °C geknetet und plastiziert, bis eine homogene, niedrigviskose Masse vorliegt. Diese wird durch Abkühlen verfestigt und zu einem Granulat mit einer Teilchengröße von etwa 0,3 bis 1,0 mm vermahlen.

### Fertigungsschritt b)

97,5 % der so entstandenen Pulvermasse werden mit 2,5 % expandierbaren Mikrosphären (EXPANCEL 950 DU 120, Fa. Akzo Nobel) in einem langsam laufenden Mischer vermischt. Die betreffenden Mikrosphären haben einen Durchmesser von 25-30 µm und eine Dichte von etwa 1 g/cm³. Dieses Pulvergemisch wird auf einem 20 mm Einschneckenextruder mit 25 D langer Schnecke plastiziert und mit einer Massetemperatur von 120 °C in der letzten Zylinderzone und dem formgebenden Werkzeug mit einer 3 x 40 mm Flachbanddüse zu einem ungeschäumten, kompakten Flachband extrudiert. Die Raumdichte beträgt ca. 2,57 g/cm³. Dieses Flachband wir auf einer Al-Platte mit Textiltuchauflage bei 160 °C (180 °) im Wärmeschrank innerhalb von ca. 20 min durch Expansion der Mikrosphären frei aufgeschäumt. Dabei wird das Flachband zwecks gleichmäßiger Aufschäumung mit einer Lage Textiltuch und einer 6 mm Al-Platte zur Beschwerung abgedeckt. Nach dem Schäumen zu einer Raumdichte von 0,85 g/cm³ wird an der Luft abgekühlt und die Textiltuchschichten werden entfernt.

### Fertigungsschritt c)

Das geschäumte ca. 5,5 mm dicke Plattenformat wird zunächst 2 h bei 120 °C und 3 h bei 145 °C im Wärmeschrank gelagert. Dabei werden noch restliche Treibgase aus den Mikrosphären entfernt, womit ein Nachschäumen beim nachfolgenden thermischen Entbinden vermieden wird. Danach durchläuft der Formkörper zwecks vollständiger Entfernung der restlichen organischen Bestandteile nachfolgendes Temperaturprogramm: 1 h 180 °C / 2 h 220 °C, danach mit 60 °C/h auf 400 °C 30 min. Haltezeit. Dann in 1 h auf 1100 °C mit 30 min. Haltezeit und danach in 4 h auf 1500 °C mit 1 h Haltezeit. Die fertige, mikroporöse Al-Oxid-Platte hat eine Raumdichte von 1,25 g/cm³ und eine offene Porosität von ca. 65 Vol% mit einer mittleren Porengröße von 100 µm. Die Skelettstruktur ist weitgehend dicht gesintert.

### Beispiel 3: Herstellung eines mikroporösen Al-Oxid-Granulatformkörpers mit offenporiger Gerüststruktur

### Fertigungsschritte a) und b) wie bei Beispiel 1

### Fertigungsschritt c)

Die geschäumten Granulatkörner werden 24 h in 40 °C warmem Aceton gelagert und verlieren durch Herauslösen dabei über 50 Vol% des Binders. Nach dem Trocknen der Granulatkörper werden diese innerhalb von 12 h gleichmäßig auf Sintertemperatur von 1400 °C erhitzt und 1 h bei dieser Temperatur gehalten, danach innerhalb von ca. 4h gleichmäßig auf Normaltemperatur abgekühlt. Die fertigen mikroporösen AI-Oxid-Granulate haben eine offene AlphaPorosität von ca. 80 Vol % mit einer mittleren Porengröße von 120 µm und eine Dichte von ca. 0,7 g/cm³. Die Gerüststruktur selbst besitzt eine offene Beta-Porenstruktur in Form von Kanälen und Leerstellen im keramischen Gefüge. Das Gesamtporenvolumen wird durch die niedrigere Sintertemperatur deutlich erhöht.

## Patentansprüche

1. Verfahren zur Herstellung eines zellularen Sinterformkörpers umfassend die Fertigungsschritte
a) Aufbereiten einer thermoplastisch fließfähigen Formmasse als feines Pulver und/oder Granulat,
b) Einarbeiten von Expansionsmitteln und Aufschäumen der Formmasse mittels des Expansionsmittels
c) Verfestigen und Sintern der Formmasse zur Herstellung des Formkörpers
**dadurch gekennzeichnet,**
**dass** als Expansionsmittel ausschließlich oder unter anderem blähfähige Mikrosphären verwendet werden und das Aufschäumen bei Temperaturen zwischen 130°C und 200°C erfolgt.

2. Verfahren gemäß Anspruch 1, **dadurch gekennzeichnet, dass** die Formmasse als Keramikpulver Aluminiumoxid und/oder Siliziumcarbid enthält.

3. Verfahren gemäß einem der vorangehenden Ansprüche, **dadurch gekennzeichnet, dass** Verfahrensschritt a) als Naßgranulation durchgeführt wird.

4. Verfahren gemäß einem der vorangehenden Ansprüche, **dadurch gekennzeichnet, dass** die Mikrosphären im im Wesentlichen unexpandierten Zustand in die Formmasse eingemischt werden.

5. Verfahren gemäß einem der vorangehenden Ansprüche, **dadurch gekennzeichnet, dass** die Mikrosphären im unexpandierten Zustand einen Durchmesser von 5 - 50 µm haben.

6. Verfahren gemäß einem der vorangehenden Ansprüche, **dadurch gekennzeichnet, dass** sich das Volumen der Mikrosphären unter Temperatureinwirkung im Bereich von zwischen 80° C und 190° C im Mittel um mehr als das 20-fache erhöht.

## Claims

1. A method of manufacturing a cellular sinter mould body comprising the production steps
a) preparing a thermoplastically flowable moulding material as a fine powder and/or granulate;
b) incorporating expansion agent and foaming the moulding material by means of the expansion agent;
c) solidifying and sintering the moulding material to manufacture the mould body,
**characterised in that**
swellable microspheres are used exclusively or inter alia as the expansion agent; and **in that** the foaming takes place at temperatures between 130°C and 200°C.

2. A method in accordance with claim 1, **characterised in that** the moulding material contains aluminium oxide and/or silicon carbide as a ceramic powder.

3. A method in accordance with one of the preceding claims, **characterised in that** method step a) is carried out as wet granulation.

4. A method in accordance with one of the preceding claims, **characterised in that** the microspheres are mixed into the moulding material in a substantially non-expanded state.

5. A method in accordance with one of the preceding claims, **characterised in that** the microspheres have a diameter of 5 - 50 µm in the non-expanded state.

6. A method in accordance with one of the preceding claims, **characterised in that** the volume of the microspheres increases on average by more than 20-fold under the effect of temperature in the range from between 80°C and 190°C.

## Revendications

1. Procédé de fabrication d'un corps à forme frittée cellulaire comprenant les étapes de production
a) préparation d'une matière à mouler thermoplastiquement apte à l'écoulement sous la forme de poudre fine et/ou de granulés,
b) incorporation de moyens d'expansion et moussage de la matière à mouler au moyen du moyen d'expansion
c) durcissement et frittage de la matière à mouler pour la fabrication du corps moulé
**caractérisé en ce que**
des microsphères aptes à gonfler sont utilisées exclusivement ou entre autres comme moyen d'expansion et le moussage est effectué à des températures entre 130 °C et 200 °C.

2. Procédé selon la revendication 1, **caractérisé en ce que** la matière à mouler en tant que poudre de céramique contient de l'oxyde d'aluminium et/ou du carbure de silicium.

3. Procédé selon l'une des revendications précédentes, **caractérisé en ce que** l'étape de procédé a) est effectuée en tant que granulation humide.

4. Procédé selon l'une des revendications précédentes, **caractérisé en ce que** les microsphères sont mélangées dans la matière à mouler dans l'état essentiellement non expansé.

5. Procédé selon l'une des revendications précédentes, **caractérisé en ce que** les microsphères ont un diamètre de 5 à 50 µm dans l'état non expansé.

6. Procédé selon l'une des revendications précédentes, **caractérisé en ce que** le volume des microsphères augmente en moyenne de plus de 20 fois sous l'action de températures dans la plage de 80 °C à 190 °C.
